(19) Europäisches Patentamt
European Patent Office
Office européen des brevets

(11) **EP 1 102 039 B1**

(12) **EUROPÄISCHE PATENTSCHRIFT**

(45) Veröffentlichungstag und Bekanntmachung des Hinweises auf die Patenterteilung:
**13.10.2004 Patentblatt 2004/42**

(51) Int Cl.7: **G01D 5/245**

(21) Anmeldenummer: **00811008.2**

(22) Anmeldetag: **30.10.2000**

(54) **Inkremental-Absolut-Abtastkopf mit gesamter Signalverarbeitung ( Photo-ASIC, ASIC )**

Incremental and absolute detector head with full signal processing ( photo ASIC, ASIC )

Tête de lecture incrémentale et absolue incluant l'élaboration complète des signaux ( ASIC photo, ASIC )

(84) Benannte Vertragsstaaten:
**CH DE FR LI**

(30) Priorität: **18.11.1999 CH 210599**

(43) Veröffentlichungstag der Anmeldung:
**23.05.2001 Patentblatt 2001/21**

(73) Patentinhaber: HERA Rotterdam B.V.
**3062 MA Rotterdam (NL)**

(72) Erfinder:
• **Der Erfinder hat auf seine Nennung verzichtet.**

(74) Vertreter: **Frei, Alexandra Sarah**
**Frei Patentanwaltsbüro,**
**Postfach 768**
**8029 Zürich (CH)**

(56) Entgegenhaltungen:
**EP-A- 0 838 665        WO-A- 00/28285**
**DE-A- 4 209 629        DE-A- 19 505 176**
**DE-A- 19 752 511        DE-T- 69 113 415**

EP 1 102 039 B1

**Beschreibung**

Die Erfindung betrifft einen Abtastkopf für eine Winkel- oder Wegmessvorrichtung sowie entsprechende vorrichtungen und ein entsprechendes Verfahren.

Bisherige Winkel-/Weg-Messsysteme sind entweder für die Inkremental-Signalausgabe oder die Absolutwert-Signalausgabe entworfen worden und werden so z. B. überwiegend für bestimmte Industrieanforderungen eingesetzt.

Dabei haben die preiswerten Inkrementalgeber die folgenden Nachteile:

- bei sehr langsamen Bewegungen/Umdrehungen: keine ausreichende Signalauflösung;
- bei sehr schnellen Bewegungen/Umdrehungen und hoher Auflösung: durch die Frequenz begrenzte Signalübertragung.

Eine Auflösung von z. B. 18 Bit, d. h. 256'000 Imp./U - was bei präzisen Maschinen bei 1 m Umfang ca. 4 μm Auflösung bedeutet -, führt bei 6'000 U/min zu Signalübertragungsfrequenzen von annähernd 30 MHz. Dies ist für die meisten Steuerungen viel zu schnell und sehr problematisch für eine störfreie Signalübertragung über lange Wegstrecken.

Die aufwendigen und teuren Absolutgeber sind wiederum beschränkt in der internen Signalaufbereitung durch aufwendige Elektronik für hohe Auflösung und schnelle Bewegungsabläufe, so dass die Absolutsysteme nur für kleinere Drehzahlen eingesetzt werden.

In letzter Zeit setzen sich vermehrt Kombinationen von Inkremental- und Absolutgebern z. B. für Servoantriebe durch, die bei Stillstand den Absolutwert und bei Bewegungsabläufen die Inkremental-Information mittels Sinus/Cosinus-Signalen zur Auswertung in eine Peripherie-Elektronik/Steuerung übertragen, die dann aufbauend auf dem ursprünglichen im Stillstand gemessenen Absolutwert den aktuellen Wert zählerisch ermittelt (siehe z. B. EP-0 575 843). Der Messwert wird somit im Betrieb erst durch die umfangreiche Peripherie-Elektronik gebildet, die mit Sample-und-Hold- sowie komplexen AD-Wandler-Bausteinen ausgestattet ist und Rechner auf Seiten der Geber- sowie Peripherie-Elektronik benötigt. Neben dem hierbei stets problematischen Verlust der richtigen Absolutposition (Störungen) ist auch bei langen Kabelstrecken die störfreie Übertragung der Analog-Signale nach Phase und Betrag sehr kritisch und stösst an physikalische Grenzen bei hochdynamischen Antrieben (obwohl durch SIN-, COS-Spannungen die Bandbreite der Übertragung reduziert wurde). Ausserdem ist es sehr schwierig, Analog-Signale über Lichtleiter zu übertragen, so dass für die geforderte EMV (elektromagnetische Verträglichkeit) besondere und erhöhte Abschirmmassnahmen sowie aufwendige Leitungstreiber bei Kupferkabeln zu treffen sind.

In DE 691 13 415 T2 wird ein Positionsaufnehmer beschrieben mit Mitteln zur Bestimmung eines Absolutwertes und eines Inkrementalwertes entsprechend seiner Position relativ zu einer Messschiene. Der Positionsaufnehmer umfasst Mittel zur Kombination eines Absolut- und eines Inkrementalwerts. Darin werden in einem Register die höherwertigen Bits vom Ablesen des absoluten Messstreifens und die niederwertigen Bits vom Ablesen des inkrementalen Messstreifens stammen. Eine derartige Kombination von Informationen stellt jedoch nur eine Aneinanderreihung von Datenbits dar, die in unterschiedlichen Datenformaten vorliegen und keinen Bezug zueinander haben. Zusätzlich bleibt bei dieser Art der Kombination offen, wie mit einem Positionsfehler umzugehen ist, der beispielsweise entsteht, wenn der grob aufgelöste Absolutwert sich unmittelbar vor einem Schaltpunkt und der fein aufgelöste Inkrermentalwert bereits unmittelbar nach einem Schaltpunkt befindet. Diese Problematiken werden weder erwähnt noch gelöst.

Diese oben beschriebenen Lösungen sind bei hohen Auflösungen und schnellen Bewegungen entweder unzureichend oder aber sehr aufwendig, teuer und unsicher. So muss z. B. bei obiger Kombination der beschriebenen Inkremental- und Absolutgeber der Antrieb bzw. die Maschine stillgesetzt werden, wenn man den Absolutwert überprüfen will bzw. bei festgestellter Störung diesen neu ermitteln muss. Dies ist bereits bei heutigem Sicherheitsstandard an Maschinen und Antrieben problematisch und für viele Betriebsvorgänge unbefriedigend. Auch führt die geteilte Messwertverarbeitung zu total unbefriedigender Zuständigkeit und Verantwortung bei gestörten Messwerten und zu ebenso gestörter Signalverarbeitung bei Serviceund Garantiefällen beim Anwender bzw. Kunden.

Es ist Aufgabe der Erfindung, eine Winkel-/Weg-Messvorrichtung zu schaffen sowie ein Verfahren zur Messung von Winkeln und/oder Wegen anzugeben, welche die oben beschriebenen Nachteile vermeiden. Die Aufgabe wird mit den unabhängigen Ansprüchen 1, 6, 12, 14 gelöst.

Die erfindungsgemässe Winkel- und/oder Weg-Messvorrichtung beinhaltet einen Abtastkopf mit mindestens einem Sensor zur Ermittlung von Absolutwerten von Winkeln und/oder Wegen und mindestens einem Sensor zur Ermittlung von zwischen zwei aufeinanderfolgenden Absolutwerten liegenden Inkrementalwerten von Winkeln und/oder Wegen. Im Abtastkopf befinden sich Mittel zur Bildung eines Gesamtabsolutwerts aus einem von mindestens einem Sensor ermittelten Absolutwert und eines von mindestens einem Sensor ermittelten Inkrementalwert und zur Bereitstellung dieses Gesamtabsolutwerts in Binär-/Digitalform.

Beim erfindungsgemässen Verfahren zur Messung von Winkeln und/oder Wegen mit einer erfindungsgemässen Messvorrichtung wird ein Gesamtabsolutwert aus einem von mindestens einem Sensor ermittelten Absolutwert und einem von mindestens einem Sensor ermittelten Inkrementalwert gebildet. Dieser Gesamtabsolutwert wird in Binär-/Digitalform bereitgestellt.

Gemäss der Erfindung wird der vom Messsystem erfasste Absolutwert mit dem getrennt, zwischen zwei Werten des erfassten Absolutwerts, ermittelten Feinwert unmittelbar in die Geberelektronik einbezogen und zusammen als Gesamtabsolutwert in Binär-/Digitalform zur Geberausgabe im gesamten Betriebsbereich bereitgestellt. Damit erfolgt die gesamte Signalverarbeitung im Abtastkopf, so dass die aufwendige Signalübertragung (Kabel, Abschirmungen usw.) wesentlich vereinfacht wird und vor allem die aufwendige Peripherie-Elektronik (AD-Wandler, Sample-und-Hold-Bausteine, Rechner usw.) entfallen kann.

Zusätzlich bietet die im Geber auf kürzesten Wegverbindungen stehende Signalverarbeitung nicht nur die geringste Störanfälligkeit und höchste Verarbeitungsgeschwindigkeit, sondern auch die Beherrschung von Signalverzögerungen sowie präziseste Feinwertinterpolationen. Die Signalverzögerungen zwischen der echten Winkel-/Wegposition und der Signalausgabe sind damit allein auf die Ausführung des Gebers zurückzuführen und nicht noch zusätzlich auf unterschiedliche Kabellängen und/oder eine Peripherie-Signal-Verarbeitungseinrichtung. Damit lässt sich der nacheilende Messwert, auch als Schleppfehler bezeichnet, einfach kompensieren, indem die Signalverzögerungen in die Signalverarbeitung einbezogen werden und so stets die wirkliche Ist-Winkel/Weg-Position zur Ausgabe bringen.

Die auf engstem Raum befindliche Signalverarbeitung erlaubt zusätzlich die präzise Synchronisation von erfassten Absolutwerten (nachfolgend "Grobwerte" genannt) und den zwischen den erfassten Absolutwerten (Grobwerten) interpolierten Inkrementalwerten (nachfolgend "Feinwerte" genannt). Der Gesamtabsolutwert setzt sich aus diesen zwei Werten zusammen und bedarf sehr sorgfältiger Abstimmung (Synchronisation) der beiden Werte, wenn Messwerte in höchster Auflösung echtzeitgerecht stets zur Ausgabe gelangen sollen. Besonders bei hochgenauen Servoantrieben mit "elektrischer Welle" (Ersatz von hochpräzisen Zahnrädern) sind mehrere Antriebe synchron zu führen, deren Lageposition gleichzeitig innerhalb des Mikrosekundenbereichs "getriggert" - und damit echtzeitgerecht - abgefragt werden, sowie im Megahertz-Bereich mittels serieller Datenübertragung zur Auswertung zu bringen.

Aber auch im Stillstand oder in sehr langsamen Bewegungen ist die präzise Erfassung der Lage bzw. des Bewegungszustandes nach Richtung bei vielen Anwendungen von grosser Bedeutung und wird durch die erfinderische Ausgestaltung des Messsystems sehr vorteilhaft bis zur höchsten Messauflösung gewährleistet.

Die erfinderische Ausgestaltung wird begünstigt durch spezielle anwendungsspezifische integrierte Schaltkreise (Application Specific Integrated Circuits, ASIC's), die sowohl optoelektronische Bausteine verarbeitungsgerecht für hohe Auflösungen ermöglichen (siehe DE-195 05 176.9, welche durch Bezugnahme in diese Schrift aufgenommen wird) als auch spezielle Hardware zur Signalverarbeitung und Feinwert-Interpolation ermöglichen.

Hier sind die Komparator-Technologien vorteilhaft, insbesondere Schaltungen mit getakteten Komparatoren, die mit höchsten Signalfrequenzen Analog-Digital-Wandlungen erlauben und wesentlich schneller, weniger aufwendig als bisherige Algorithmen mittels Rechenbausteinen die Signalverarbeitung in der Sensorelektronik bewerkstelligen. Besonders vorteilhaft ist es, die "Grobwert-Bildung" und "Feinwert-Bildung" abzustimmen, so dass für die Komparator-Technologie die Interpolation nicht höher als z. B. 6 Bit zu realisieren ist (Hardware-Integrationsaufwand steigt jeweils um Faktor 2 bei nächsthöherer Auflösung). Im Praxisfall wurde der "Grobwert" auf 12 Bit optimiert festgelegt, so dass mit der Feinwertbildung 5 bzw. 6 Bit ein Absolutgeber mit 17 bzw. 18 Bit mit zuvor genannten Vorteilen erreicht wird. Das Messsystem lässt mit zunehmenden Verarbeitungsgeschwindigkeiten der Halbleitertechnologie die flexible Anpassung an noch höhere Auflösungen bzw. Messgeschwindigkeiten zu.

Es kann auch für hochauflösende Absolutgeber (z. B. mit 20 Bit und mehr) mit geringen Bewegungsgeschwindigkeiten zweckmässig sein, die Feinwerte zusätzlich als Analogwerte zu dem im Sensor realisierten Gesamtabsolutwert von z. B. 18 Bit herauszuführen und in der Peripheriesteuerung die Analog-Digitalwandlung mit höherer Auflösung vorzunehmen. Es bleiben hierbei die grossen Vorteile der stets realitätsbezogenen und damit störfesten Absolutwertüberprüfung sowie der gesicherten Messverarbeitung der höheren Messgeschwindigkeiten mit geringerer Auflösung.

Die ASIC-Lösung bietet mit den oben beschriebenen Massnahmen für den Betreiber und Hersteller einen grossen Vorteil, da für die gestellte Aufgabe auf einen Rechner bei der Signalverarbeitung verzichtet werden kann und somit die zusätzliche Software für den Betrieb des Winkel-/Weg-Messsystems entfallen kann.

Um den Aufwand an Kabeln, Steckern und Elektronik möglichst gering zu halten, ist es zweckmässig, die Absolutwerte seriell zu übertragen. Hier hat sich besonders die bekannte "Schnittstelle SSI" (synchronserielle Übertragung) bewährt, die sehr flexibel die Handhabung der Daten erlaubt (Triggern, Übertragungsfrequenz, Auflösungsgenauigkeit usw.).

Da die Messwertverarbeitung keine Verarbeitung von Analog-Signalen durch externe Steuerungen mehr benötigt, reicht z. B. die serielle Schnittstelle SSI für die Datenübertragung der Messdaten vollkommen aus. Durch die permanent abrufbaren Messdaten mit hoher Verarbeitungsgeschwindigkeit sind die Absolutwerte in hoher Übertragungsfrequenz (z. B. mehrere Megahertz) verfügbar und brauchen keine sonstigen Inkrementalsignale an die Peripheriesteuerung zu übertragen

Erfindungsgemäss kann der Taktsignaleingang der SSI-Schnittstelle für Programmierfunktionen neben dem durch SSI-Konventionen festgelegten Datenabruf benutzt werden. Die Programmierfunktionen können z. B. für Herstellerzwecke (Gebervarianten etc.), für anwendungsspezifische Zwecke oder für Kundenzwecke (Kennzeichnen, Abspeichern von Daten) konzipiert sein. Dabei wird ein Unterscheidungsmerkmal für die Programmierfunktionen benötigt. Als Unterscheidungsmerkmal kann vorteilhafterweise die Verlängerung des Taktsignals nach der ersten negativen Taktflanke auf eine Zeitspanne, welche länger ist als die Monoflop-Zeit, dienen. (Die Monoflop-Zeit beträgt typischerweise ca. 20 µs; erst nach Ablauf dieser Zeit können erneut neue Winkel-/Weg-Messdaten angefordert werden.) Es ist zweckmässig, nach Ablauf dieser längeren Zeitspanne erneut eine z. B. der Monoflop-Zeit entsprechende Zeit als Kriterium für die einsetzende Programmierfunktion bzw. deren Ende wie SSI-üblich heranzuziehen. Unabhängig von den Programmierfunktionen können dabei auch die Kriterien für ‚Echtzeitänderungen', z. B. während 10 ms (entspricht 1 Umdrehung bei 6'000 U/min) bzw. gleichzeitige Datenübertragung über die Datenleitung einfliessen (bspw. bezogener Absolutwert der gerade gesetzten "Nullstellung" usw.).

Einen besonderen Vorteil bietet eine Ausführungsform der erfindungsgemässen Winkel-/Wegmessvorrichtung, in welcher die serielle SSI-Schnittstelle für eine "Relativ-Nullsetzung" verwendet wird. Mit der Relativ-Nullsetzung wird mit der definierten Taktflanke das Absolutmesssystem zu diesem Zeitpunkt bzw. bei dieser Winkellage zu "Null" gesetzt, unabhängig von dem durch die Messverkörperung fest kodierte Null-Signal. Damit können in dieser Ausführungsform unter allen Betriebsbedingungen einfach zu handhabende Bezugssysteme durch die Peripherie-Steuerungen geschaffen werden, die eine übersichtliche Informationsverarbeitung erlauben. So ist es z. B. für Bediener einfacher, Verstellvorgänge vorzunehmen, wenn von einem Zahlenwert 0,000 mm um relativ + 15 µm verstellt werden soll (also auf + 0,015 mm), statt dies vom Zahlenabsolutwert 1,127 mm + 0,015 mm = 1,142 mm aus zeitraubend und möglicherweise fehlerhaft auszuführen. Bei Mehrfachantrieben, z. B. in Druckmaschinen, erleichtert es die Überwachung und die gleiche Datenverarbeitung, wenn die Phasenlage der Druckwerte bei passendem Druckbild alle den gleichen Bezugswert haben.

Die SSI-Schnittstelle kann erfindungsgemäss auch zur Realisierung einer "Monoflop-Zeitsetzung" verwendet werden. Mit der Monoflop-Zeitsetzung wird vorteilhaft die sehr schnelle Datenübertragung des Messsystems unterstützt. Statt der üblichen und festen Monoflop-Zeiten von ca. 20 bis 30 µs (nach Ablauf dieser Zeit können erst neue Winkel-/Weg-Messdaten übertragen werden) wird der Peripherie-Steuerung erlaubt, die passende bzw. gewünschte Zeit zu setzen. Für sehr schnelle Peripherie-Elektroniken, z. B. hochdynamische Servoantriebe, ergeben sich damit praktisch unterbrechungsfreie Absolutwertübertragungen. Bei Taktfrequenzen von bspw. 1.5 MHz sind auf diese Weise stets aktuell 16-Bit-Absolutwerte seriell in ca. 10 bis 12 µs zu übertragen. Dies erlaubt z. B. eine ganz neue und vorteilhafte Ausgestaltung von Werkzeugmaschinen-Steuerungen bezüglich Genauigkeit von schnellen Bearbeitungsvorgängen oder aber deren höhere Geschwindigkeit.

Ohne die Standard-Konvention von SSI-Messdatenübertragung zu verletzen und ohne Zusatzleitungen werden so erfindungsgemäss mit einfachen Schaltungsmassnahmen in der Geberelektronik vorteilhafte Programmierfunktionen - z. B. mittels RS 422 (bzw. RS 485) - ermöglicht, die nicht einmal einen Rechner im Messsystem selbst benötigen. Die gesamte erfinderische Signalverarbeitung im Messwertgeber erlaubt die Überwachung des Gebers selbst und wird der Peripheriesteuerung vorteilhafterweise sofort über die auf "Low"-Signal gesetzte Datenleitung angezeigt. Damuit wird nach der SSI-Konvention der Peripheriesteuerung ohne Zusatzaufwand an Kabel und Datenkommunikation die Fehleranzeige vorteilhafterweise übermittelt.

Die nach Erfindung ausgebildeten Absolutgeber sind universell einsetzbar und können somit die bisherigen preisgünstigen Inkrementalgeber und teuren Absolutgeber mit geteilter Messwertverarbeitung ersetzen. Der Anwender hat nicht nur die Vorteile der Signalverarbeitung (Auflösung, Geschwindigkeit); vielmehr ist die Peripherie-Steuerung lediglich auf Verarbeitung von Digitaldaten auszulegen, was mit zunehmenden auf PC (Personal Computer) und WS (Work Station) basierenden Steuersystemen von signifikantem Vorteil ist, da Zusatzhardware und Software entfallen.

Besonders vorteilhaft ist auch eine weitere Ausführungsform der Erfindung, welche die Kabel über Schnittstellen in sogenannten Adaptern einbezieht. Die geberseitigen Adapter bieten sich z. B. zur Unterbringung einer geeigneten Versorgungsspannung von bspw. 5 V an, die vorteilhaft erlaubt, mit gleicher Spannungsversorgung der Sensorelektronik die Winkel- und Wegmessgeber wie bei kurzen Leitungen auszubilden, weil der Spannungsabfall bei langen Kabeln (typischerweise ca. 1-2 V Spannungsabfall) durch die 5V-Regeleinrichtung kompensiert wird. Auch bieten die Adapter die günstige Unterbringung der galvanischen Trennung durch Optokoppler und damit den Einsatz von Lichtleitern. Der steuerungsseitige Adapter wiederum bietet den Vorteil der unveränderten Elektroniksignalverarbeitung in der 5V-PC/WS-Steuerungsumgebung ohne besondere Stecker-, Kabel- bzw. Abschirmmassnahmen.

Diese Adapterkonzeption - wobei der Adapter im Sensor, im Stecker oder in einem separaten Kabelinterface als Schnittstelle untergebracht sein kann - bietet somit die weitestgehende Entkopplung, sowohl der Messgeber als auch der Steuerungsausführung von der Kabelstrecke und sonstigen Signalanpassungs- sowie EMV-Massnahmen. Die Kabel als Lichtleiter, für z. B.

die SSI-Schnittstellen, bieten den Vorteil hoher und störfreier Übertragung und Wegfall von aufwendigen und teuren Leitungstreibern, sowohl auf Messgeber- als auch Steuerungsseite. Zusätzlich entfallen die aufwendigen Abschirmmassnahmen, die im Betriebseinsatz besonders bei Kupferkabeln mit grosser Kabellänge unumgänglich und kostenintensiv sind. Das Winkel-/Weg-Messsystem wird in dieser Ausführungsform in seiner Funktion unabhängig von der gewählten Leitungslänge (z. B. maximal 50-70 m bei Kunststofflichtleitern) und ist für die praxisgerechte Handhabung im Feldeinsatz von grossem Vorteil.

Durch die Adapterkonzeption lassen sich besonders die Vorteile der stets aktuell ermittelten Gesamtabsolutwerte für die Signalübertragung der Werte an einer SSI-Schnittstelle erläutern. Bei kurzen Kabeln (also ohne Adapter), z. B. $\leq 1$ m Kabellänge, sind Taktfrequenzen über > 1.5 MHz bei der erfinderischen Ausgestaltung des Messsystems problemlos und ohne Zusatz erreichbar. Diese hohe Übertragungsfrequenz lässt sich auch bei langen Leitungen mit Lichtleiterkabeln von ca. 30 m bewerkstelligen, obwohl im Normalfall insgesamt 60 m für die Hin- und Rückleitung benötigt werden. Um die Strecke von s = 60 m zurückzulegen, braucht das Licht in einem Lichtleiter mit einer effektiven Brechzahl von N = 1.5 die Zeit

$$t = \frac{s}{\frac{c}{N}} = 300 \text{ ns },$$

wobei c = $3 \cdot 10^8$ m/s die Vakuumlichtgeschwindigkeit ist. Bei einem Puls/Pause-Verhältnis von ca. 50 % entspricht dies bereits einer Taktfrequenz von

$$f = \frac{1}{2t} = 1.7 \text{ MHz }.$$

Die Übertragungsfrequenz kann aber auch annähernd auf ca. den doppelten Wert gesteigert werden bei der erfinderischen Aufbereitung der Absolutwerte, weil mit asymmetrischem Puls-/Pause-Verhältnis (z. B. 1:5 bis 1:10) gearbeitet und die kritischen Verzögerungszeiten entsprechend in die Halbperiode gelegt sind. Hier sind besonders die Lichtleiter von grossem Vorteil, weil nur Lichtimpulslängen zu wählen sind, die der Signalverarbeitungszeit der jeweiligen Elektroniken (Geber-/, Peripherie-Steuerung) entsprechen müssen.

Diese Datenübermittlung erlaubt sowohl mit als auch ohne Adapter zusätzlich den sehr effizienten Einsatz eines schnellen Rechners, der durch die schnelle Signalverfügbarkeit (nach Taktabfrage) von einigen 10 nsec durch Multiplex-Betrieb quasi parallel mehrere Messwertgeber (d. h. Servoantriebe) mit höchster Taktfrequenz gleichzeitig und nacheinander abfragen kann. Somit werden durch diese Massnahmen Übertragungsverhältnisse erreicht, die die Messwert-Signalübertragung praktisch unabhängig von der Kabellänge macht!

Dies sind unschätzbare Vorteile, da so die Konzeption von Steuerungen ohne Berücksichtigung der Signallaufzeit durch Kabellängen, z. B. bei hochdynamischen Servoantrieben, erfolgen kann.

Somit erlaubt diese systemgerechte Konzeption von Messwertgebern und Adaptern mit Lichtleiterkabeln eine Echtzeit-Signalverarbeitung, ohne die sonst nachteiligen Kabelstrecken einbeziehen zu müssen. Im Feldeinsatz ist das eine unschätzbare Erleichterung, die der vermehrt einsetzenden Servoantriebstechnik, durch so gestaltete Messgeber, positiv den Weg bereitet.

Es braucht nicht besonders betont zu werden, dass die geschilderte Winkel-/Weg-Messvorrichtung in der erfinderischen Ausgestaltung auf verschiedene physikalische Wirkprinzipien, z. B. magnetische, elektrische, elektrostatische, optische usw., übertragbar ist. In der nachfolgenden Beschreibung und anhand der nachfolgenden Figuren wird die Erfindung an einem Beispiel mit optischem Messgeber erläutert. Dabei zeigen schematisch:

Fig. 1     eine Lichtquelle, eine Massverkörperung, ein optisches Abbidlungssystem und einen Photo-ASIC in einer perspektivischen Ansicht,

Fig. 2     die Elemente von Fig. 1 und zusätzlich ein Trägersubstrat in einer Seitenansicht,

Fig. 3     speziell ausgebildete Detektorflächen eines erfindungsgemässen Photo-ASICs,

Fig. 4     eine erfindungsgemässe Vorrichtung in Form eines Blockdiagramms und

Fig. 5     ein Blockdiagramm einer erfindungsgemässe Interface-Elektronik.

Eine bevorzugte Ausführungsform der erfindungsgemässen optischen Winkel-/Weg-Messsvorrichtung beinhaltet vorzugsweise:

• eine elektromagnetische Strahlungsquelle (Lichtquelle)
• eine Massverkörperung
• ein optisches Abbildungssystem
• einen Photo-ASIC
• eine Interface-Elektronik
• ein Sensor-Gehäuse
• Adapter-Schnittstellen mit Kabel.

Diese Elemente und ihr Einsatz in der erfindungsgemässn Vorrichtung werden im folgenden diskutiert.

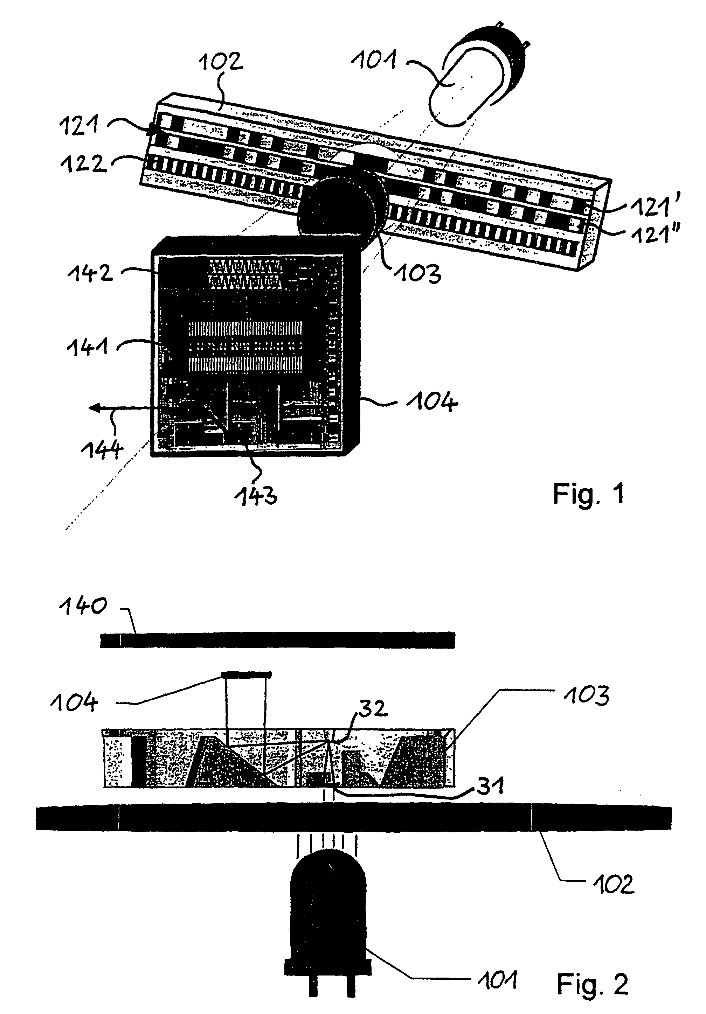

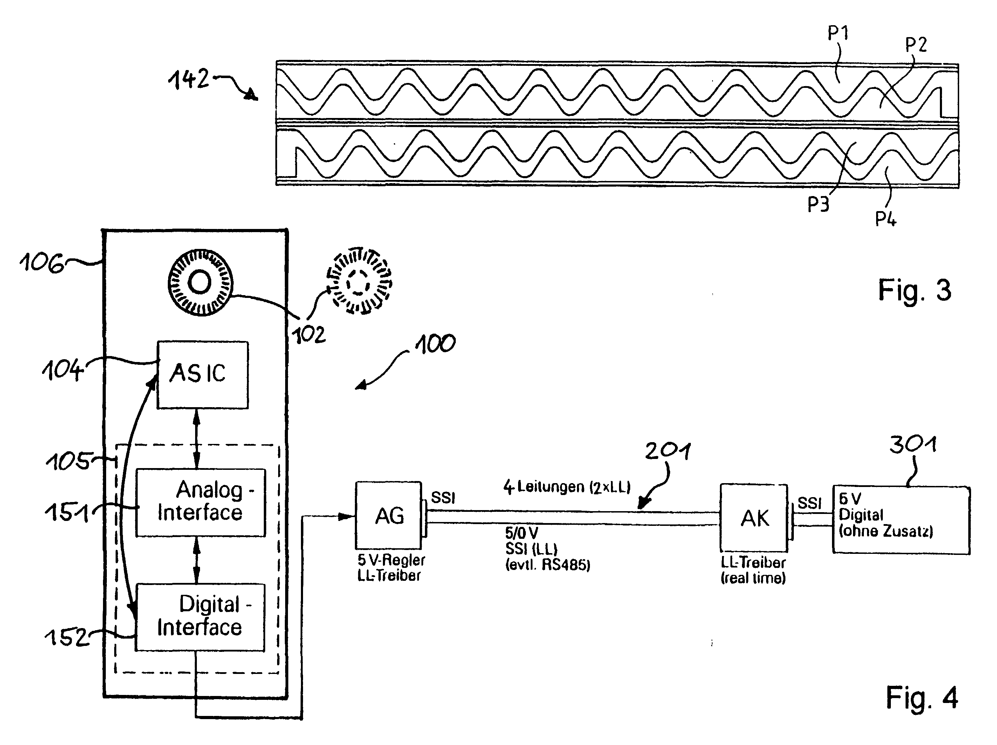

**Figur 1** zeigt eine elektromagnetische Strahlungsquelle 101, nachfolgend als Lichtquelle bezeichnet, eine Massverkörperung 102, ein optisches Abbidlungssystem 103 und einen Photo-ASIC 104 in einer beispielhaften Ausführungsform der erfindungsgemässen Vorrichtung. Die Lichtquelle 101 kann bspw. als Leuchtdiode (LED) ausgeführt sein. Die Massverkörperung 102 kann als Massstab (für Wegmessvorrichtungen, wie in Fig. 1) oder als Scheibe bzw. Trommel (für Winkelmessvorrichtungen, vgl. Fig. 4) ausgebildet sein. Sie enthält im wesentlichen zwei Massverkörperungsspuren 121, 122, eine erste Massverkörperungsspur 121 für einen direkt erfassbaren Absolutwert (Grobwert) und eine zweite Massverkörperungsspur 122 für Inkrementalwerte, die auswertbare und interpolierbare Analogsignale zwischen zwei erfassbaren Absolutspuren bilden (in der Regel SIN-/COS-Signale). Der Absolutcode auf der ersten Masssverkörperungsspur 121 kann z. B. ein Pseudo-Random-Code (PRC) sein. Dabei kann aus Gründen der bewährten Differenz-Signalbildung die erste Massverkörperungsspur 121 in Form von zwei Teilspuren 121', 121" vorhanden sein, wobei die beiden Teilspuren 121', 121" denselben Binärcode beinhalten, aber zueinander invers sind (d. h. bei "0" auf der ersten Teilspur 121' liegt "1" auf der zweiten Teilspur 121" vor und umgekehrt).

In **Figur 2** sind Elemente der erfindungsgemässen Vorrichtung in einer Seitenansicht dargestellt. Die Ausführungsform von Fig. 2 ist ein Winkelmessgeber, bei welchem die Massverkörperung 102 eine Scheibe ist, bspw. eine Glasscheibe mit Chrom-Kodierung. Das optische Abbildungssystem 103 ist vorzugsweise als telezentrisches System ausgebildet, welches die Massverkörperungsspuren 121, 122 (Skalen für Absolut- und Inkrementalspur) im Durchlicht (oder im Reflexlicht, bspw. mittels einer diffraktiven Folie) grössenrichtig auf die Abmessungen von photosensitiven Flächen auf dem Photo-ASIC 104 abbildet. Es umfasst eine Abbildungslinse 131 und eine als Austrittspupille wirkende, als Reflektor ausgebildete Aperturblende 132. Das optische Abbildungssystem 103 kann in einem Block, bspw. aus Kunststoff, integriert sein. Der Photo-ASIC 104 ist vorzugsweise auf einem Träger 140, bspw. einem Flexprint-Träger, aufgebracht.

Zur Erläuterung des Photo-ASIC 104 wird wiederum auf **Figur 1** sowie auf die Schrift DE-195 05 176.9 verwiesen. Er ist im Wesentlichen mit photosensitiven Flächen 141 (für Absolutspur 121) und 142 (für Inkrementalspur 122) versehen, welche die Detektion des von den Massverkörperungsspuren 121, 122 (absolut und inkremental) durch die abbildende Optik 103 zum ASIC 104 gelangten Lichts bewerkstelligen. Die detektierte Lichtintensität wird mittels geeigneter Elektronik 143 in entsprechende digitale und analoge elektrische Signale 144 umgewandelt.

Die photosensitiven Flächen 142 für die Inkrementalspur 122 sind vorzugsweise gemäss **Figur 3** speziell ausgebildet. In dieser Ausführungsform sind sie in vier Teilflächen P1-P4 unterteilt, welche lokal gleich einer Sinusfunktion sind. Die vier Teilflächen P1-P4 sind jeweils um 90° gegeneinander phasenverschoben. Wenn nun ein geeignetes Muster von hellen und dunklen Bereichen derselben Periode wie die Sinusfunktion

von der Massverkörperung 102 auf diese Flächen 142 abgebildet wird, liefern die vier Teilflächen P1-P4 vier ortsabhängige Signale in Quadratur. Diese Ausgestaltung ist in DE-195 05 176.9 detailliert beschrieben, welche durch Verweis in diese Schrift aufgenommen wird.

**Figur 4** zeigt schematisch eine erfindungsemässe Vorrichtung in Form eines Blockdiagramms. Auf der linken Seite des Blockdiagramms sind Teile eines Abtastkopfes 100 dargestellt. Der Abtastkopf 100 ist in einem Gehäuse 106 untergebracht. Die Massverkörperung 102 kann sich dabei innerhalb oder ausserhalb des Gehäuses 106 befinden; letztere Möglichkeit ist gestrichelt dargestellt. Am Ausgang des Photo-ASIC 104 befindet sich ASIC-Schnittstellenelektronik 105; diese umfassen eine Analog-Schnittstellenschaltung 151 (SEMI-Analog ASIC) sowie eine Digital-Schnittstellenschaltung 152 (FPGA, MPGA). In der Mitte des Blockdiagramms sind externe Adapter-Schnittstellen AG (Adapter Geber), AK (Adapter Kunde) für Stecker und Kabel 201 für die Datenübermittlung zwischen Abtaskopf 100 und Anwender sowie für die Spannungsversorgung des Abtastkopfes 100 dargestellt. Für die Datenübermittlung werden bei langen Übertragungsstrecken vorzugsweise Lichtleiter 201 mit entsprechenden Opto-Kopplern verwendet. Auf der rechten Seite des Blockdiagramms ist eine Steuerung durch einen Anwender, bspw. mittels eines Mikrocomputers (μC) oder einer Workstation (WS) 301 mit einem entsprechenden Adapter AK, dargestellt.

Es braucht nicht besonders betont zu werden, dass der Photo-ASIC 104 mit der Interface-Elektronik 105, zusammen mit der Analog-Schnittstellenschaltung 151 und der Digital-Schnittstellenschaltung 152, durch eine einzige integrierte Elektronikschaltung (ASIC) gebildet werden kann. Auch ist es möglich, die Integration einer Photo-LED 101 als Beleuchtung in die Elektronik zu integrieren und die Abbildungsoptik 103 sehr eng als integraler Bestandteil des Photo-ASIC 104 zu betrachten.

Das Sensor-Gehäuse 106 für die erfindungsgemässe Vorrichtung dient im wesentlichen zur Aufnahme der abbildenden Optik 103 mit Opto-ASIC 104 und Interface-Elektronik 105 und eventueller Stecker- bzw. Kabelbefestigungen. Die Massverkörperung 102 kann sich innerhalb oder ausserhalb des Abtastkopfes 100 befinden. Ist die Massverkörperung 102 innerhalb des Abtastkopfes 100, so ist sie dort - z. B. bei Winkel-Messwertgebern - gelagert und zur optischen Signalübertragung entsprechend montiert.

Die in Analog-Interface-Schaltung 151 beinhaltet die SIN-/COS-Signalverarbeitung mit geeigneten Komparatorschaltungen. Die Komparatorschaltungen können in zwei Ausführungsformen vorliegen:

- mit Schwellwertschaltern und Verknüpfungselektronik sowie entsprechenden Operationsverstärkern, oder

- mit getakteten Komparatoren und Schwellwertkonfiguration mit Interpolationsauswertung für Binärzähler-Ausgabe.

Die Digital-Interface-Schaltung 152 beinhaltet die digitale Signalverarbeitung der erfassten Absolutwerte mit den Signalen der Analog-Interface-Schaltung und den Synchron-Massnahmen zu einem Gesamtabsolutwert. Neben der Verarbeitung von bestimmten Signalen vom Photo-ASIC 104 sind weitere Signalverarbeitungen darin realisiert, die z. B. die SSI-Ausgabe ermöglichen und Sicherheitsmassnahmen beinhalten.

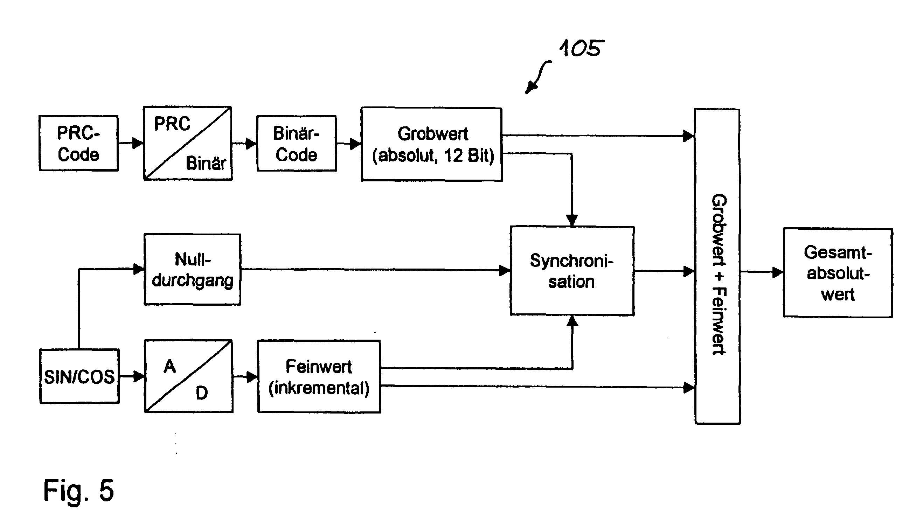

**Figur 5** zeigt ein Blockdiagramm der Interface-Elektronik 105. Sie verarbeitet den stets vom Photo-ASIC 104 gelieferten Grobwert und Feinwert zu einem Gesamtabsolutwert und stellt diesen in Binär-/Digitalform zur Sensor-Ausgabe bereit. Der Gesamtabsolutwert wird vorzugsweise im Industriestandardformat SSI bereitgestellt, welcher von einer geeigneten Schnittstelle direkt zur Steuerung einer (nicht dargestellten) Maschine verwendet werden kann.

**Patentansprüche**

1.  Abtastkopf (100) für eine Winkel- oder Weg-Messvorrichtung, mit mindestens einem ersten Sensor (141) zur Ermittlung von Absolutwerten von Winkeln oder Wegen und mindestens einem zweiten Sensor (142) zur Ermittlung von zwischen zwei aufeinanderfolgenden Absolutwerten liegenden Inkrementalwerten von Winkeln oder Wegen, **gekennzeichnet durch** im Abtastkopf (100) befindliche Mittel (105) zur Bildung eines Gesamtabsolutwerts aus einem von dem mindestens einen ersten Sensor (141) ermittelten Absolutwert und einem von dem mindestens einen zweiten Sensor (142) ermittelten Inkrementalwert und zur Bereitstellung dieses Gesamtabsolutwerts in Binär-/Digitalform.

2.  Abtastkopf (100) nach Anspruch 1, enthaltend zusätzliche Mittel (105) zur Steuerung einer synchronen Zusammensetzung der ermittelten Inkrementalwerte zum Gesamtabsolutwert.

3.  Abtastkopf (100) nach Anspruch 1 oder 2, enthaltend zusätzliche Mittel (105) zur Ableitung einer Bewegungsrichtung aus den ermittelten Inkrementalwerten im Auflösungsbereich der Messvorrichtung.

4.  Abtastkopf (100) nach einem der Ansprüche 1-3, enthaltend zusätzliche Mittel (105) zur Einbeziehung einer Signalverzögerung der Messvorrichtung bei der Bildung des Gesamtabsolutwertes in die Signalverarbeitung.

5.  Abtastkopf (100) nach einem der Ansprüche 1-4, enthaltend, vorzugsweise getaktete, Schwellwert-Komparatoren (151) zur Ermittlung der Inkrementalwerte aus Analog-Signalen mindestens eines zweiten Sensors (142).

6.  Winkel- oder Weg-Messvorrichtung mit einem Abtastkopf (100) nach einem der Ansprüche 1-5, enthaltend mindestens einen Adapter (AG, AK) zur Signalentkopplung zwischen der Abtastkopfausgabe und einer Peripherie-Steuerung (301).

7.  Vorrichtung nach Anspruch 6, wobei der mindestens eine Adapter (AG, AK) eine Spannungsversorgungseinheit zur Erzeugung der Versorgungsspannung der Vorrichtung beinhaltet.

8.  Vorrichtung nach Anspruch 6 oder 7, wobei der mindestens eine Adapter (AG, AK) eine galvanische Trenneinrichtung für die Signalübertragung enthält.

9.  Vorrichtung nach einem der Ansprüche 6-8, wobei der mindestens eine Adapter (AG, AK) derart ausgestaltet ist, dass die Peripherie-Steuerung (301) unbeeinflusst bleibt.

10. Vorrichtung nach einem der Ansprüche 6-9, enthaltend eine serielle Schnittstelle, vorzugsweise eine SSI-Schnittstelle, für die Ausgabe des Gesamtabsolutwerts und Mittel zur Verarbeitung von Pegeln über die serielle Schnittstelle, welche von einer externen Steuerung (301) vorgegeben werden.

11. Vorrichtung nach Anspruch 10, zwecks Programmierung enthaltend eine Schnittstelle RS 422 und/oder RS485.

12. Winkel- oder Weg-Messvorrichtung mit einem Abtastkopf (100) nach einem der Ansprüche 1-5, enthaltend eine serielle Schnittstelle, vorzugsweise eine SSI-Schnittstelle, für die Ausgabe des Gesamtabsolutwerts und Mittel zur Verarbeitung von Pegeln über die serielle Schnittstelle, welche von einer externen Steuerung (301) vorgegeben werden.

13. Vorrichtung nach Anspruch 12, zwecks Programmierung enthaltend eine Schnittstelle RS 422 und/oder RS485.

14. Verfahren zur Messung von Winkeln und/oder Wegen mit einer Messvorrichtung mit einem Abtastkopf (100) nach Anspruch 1, **dadurch gekennzeichnet, dass** ein Gesamtabsolutwert aus einem von mindestens einem Sensor (141) ermittelten Absolutwert und einem von mindestens einem Sensor (142) ermittelten Inkrementalwert gebildet wird und dieser Gesamtabsolutwert in Binär/Digitalform bereitgestellt wird.

15. Verfahren nach Anspruch 14, wobei die ermittelten Inkrementalwerte die synchrone Zusammensetzung zum Gesamtabsolutwert in einer Sensorelektronik (105) steuern.

**16.** Verfahren nach Anspruch 14 oder 15, wobei aus den ermittelten Inkrementalwerten die Bewegungsrichtung im Auflösungsbereich der Messvorrichtung von einer Sensorelektronik (105) abgeleitet wird.

**17.** Verfahren nach einem der Ansprüche 14-16, wobei eine Signalverzögerung der Messvorrichtung bei der Bildung des Gesamtabsolutwertes in die Signalverarbeitung einbezogen wird.

**18.** Verfahren nach einem der Ansprüche 14-17, wobei die Inkrementalwerte durch, vorzugsweise getaktete, Schwellwert-Komparatoren (105) aus Analog-Signalen ermittelt werden.

**19.** Verfahren nach einem der Ansprüche 14-18, wobei von einer externen Steuerung (301) aufgeprägte Pegel verarbeitet werden.

**20.** Verfahren nach Anspruch 19, wobei die extern aufgeprägten Pegel in Kombination von Daten- und Taktleitung einer seriellen Schnittstelle nach Pegel und Zeit relevante Informationen übermitteln.

**21.** Verfahren nach Anspruch 20, wobei das Taktsignal nach einer negativen Taktflanke auf eine Zeitspanne, welche länger als die Monoflop-Zeit der seriellen Schnittstelle ist, verlängert wird.

**22.** Verfahren nach Anspruch 20 oder 21, wobei eine Datenleitung der seriellen Schnittstelle bei festgestellter Störung in der Vorrichtung ein LOW-Signal zur Datenausgabe bringt.

**23.** Verfahren nach einem der Ansprüche 20-22, wobei zur Steigerung der Übertragungsfrequenz ein asymmetrisches Puls-/Pause-Verhältnis gewählt wird.

**24.** Verfahren nach einem der Ansprüche 20-23, wobei über die serielle Schnittstelle mit einer definierten Taktflanke der Gesamtabsolutwert auf "Null" gesetzt wird.

**25.** Verfahren nach einem der Ansprüche 20-24, wobei Analog-Signale der Inkrementalwerte zusätzlich zum Gesamtabsolutwert bereitgestellt werden.

**Claims**

**1.** Sensing head (100) for a device for measuring angles or distances with at least one first sensor (141) for determining absolute values of angles or distances and at least one second sensor (142) for determining incremental values of angles or distances, lying between successive absolute values, **characterized by** means (105) in the sensing head (100) for forming a total absolute value from an absolute value determined by at least one first sensor (141) and an incremental value determined by at least one second sensor (142) and for providing this total absolute value in binary/digital form.

**2.** Sensing head (100) according to Claim 1, containing additional means (105) for controlling a synchronous combination of the determined incremental values to form the total absolute value.

**3.** Sensing head (100) according to Claim 1 or 2, containing additional means (105) for deriving a direction of movement from the determined incremental values in the resolution range of the measuring apparatus.

**4.** Sensing head (100) according to one of Claims 1 to 3, containing additional means (105) for including in the signal processing a signal delay of the measuring apparatus when forming the total absolute value.

**5.** Sensing head (100) according to one of Claims 1 to 4, containing preferably clocked threshold value comparators (151) for determining the incremental values from analogue signals of at least a second sensor (142).

**6.** Device for measuring angles or distances with a sensing head (100) according to one of Claims 1 to 5, containing at least one adapter (AG, AK) for signal decoupling between the sensing-head output and a peripheral control system (301).

**7.** Device according to Claim 6, wherein the at least one adapter (AG, AK) contains a voltage supply unit for generating the supply voltage of the apparatus.

**8.** Device according to Claim 6 or 7, wherein the at least one adapter (AG, AK) contains a DC isolating device for the signal transmission.

**9.** Device according to one of Claims 6 to 8, wherein the at least one adapter (AG, AK) is configured in such a way that the peripheral control system (301) remains unaffected.

**10.** Device according to one of Claims 6 to 9, containing a serial interface, preferably an SSI interface, the output of the total absolute value, and means for processing levels, via the serial interface, which are predefined by an external control system (301).

**11.** Device according to Claim 10, containing an RS 422 and/or RS 485 interface for the purpose of programming.

**12.** Device for measuring angles or distances with a sensing head (100) according to one of Claims 1 to 5, containing a serial interface, preferably a SSI interface for output of a total assault value and means for processing levels via the serial interface, which are predefined by an external control system (301).

**13.** Device according to claim 12, for programming, containing an interface RS 422 and/or RS485

**14.** Method for measuring angles and/or distances with a measuring device with a sensing head (100) according to Claim 1, **characterized in that** a total absolute value is formed from an absolute value determined by at least one sensor (141) and an incremental value determined by at least one sensor (142), and this total absolute value is provided in binary/digital form.

**15.** Method according to Claim 14, the incremental values determined controlling the synchronous combination to form the total absolute value in control electronics (105).

**16.** Method according to Claim 14 or 15, the incremental values determined being used by sensor electronics (105) to determine the direction of movement in the resolution range of the measuring apparatus.

**17.** Method according to one of Claims 14 to 16, a signal delay of the measuring device being included in the signal processing when forming the total absolute value.

**18.** Method according to one of Claims 14 to 17, the incremental values being determined from analogue signals by preferably clocked threshold value comparators (105).

**19.** Method according to one of Claims 14 to 18, levels impressed by an external control system (301) being processed.

**20.** Method according to Claim 19, the externally impressed levels transmitting information that is relevant in terms of level and time in a combination of a data and clock line belonging to a serial interface.

**21.** Method according to Claim 20, the clock signal, after a negative clock edge, being lengthened to a time interval which is longer than the monoflop time of the serial interface.

**22.** Method according to Claim 20 or 21, a data line in the serial interface outputting a LOW signal if a fault is detected in the apparatus.

**23.** Method according to one of Claims 20 to 22, an asymmetrical mark/space ratio being selected in order to increase the transmission frequency.

**24.** Method according to one of Claims 20 to 23, the total absolute value being set to "zero" over the serial interface by a defined clock edge.

**25.** Method according to one of Claims 20 to 24, analogue signals of the incremental values being provided in addition to the total absolute value.

**Revendications**

**1.** Tête de palpage (100) pour un dispositif de mesure d'angles ou de distances, qui comprend au moins un premier capteur (141) qui détermine des valeurs absolues d'angles ou de distances et au moins un deuxième capteur (142) qui détermine des valeurs d'incrément situées entre deux valeurs absolues successives d'angles ou de distances, **caractérisée par** des moyens (105) prévus dans la tête de palpage (100) pour former une valeur absolue totale à partir d'une valeur absolue déterminée par au moins un premier capteur (141) et d'une valeur d'incrément déterminée par au moins un deuxième capteur (142) et pour délivrer cette valeur absolue totale sous forme binaire/numérique.

**2.** Tête de palpage (100) selon la revendication 1, qui contient des moyens (105) supplémentaires pour commander une association synchrone des valeurs d'incrément déterminées pour obtenir la valeur absolue totale.

**3.** Tête de palpage (100) selon les revendications 1 ou 2, qui contient des moyens supplémentaires (105) pour dériver une direction de déplacement des valeurs d'incrément déterminées dans la plage de résolution du dispositif de mesure.

**4.** Tête de palpage (100) selon l'une des revendications 1 à 3, qui contient des moyens supplémentaires (105) pour introduire une temporisation du signal du dispositif de mesure lors de la formation de la valeur absolue totale dans le traitement du signal.

**5.** Tête de palpage (100) selon l'une des revendications 1 à 4, qui contient des comparateurs (151) de valeurs de seuil, de préférence cadencés, pour déterminer les valeurs d'incrément à partir de signaux analogiques d'au moins un deuxième capteur (142).

**6.** Dispositif de mesure d'angle ou de distance doté d'une tête de palpage (100) selon l'une des revendications 1 à 5, qui contient au moins un adaptateur (AG, AK) de découplage des signaux entre l'émission de la tête de palpage et une commande périphérique (301).

**7.** Dispositif selon la revendication 6, dans lequel l'adaptateur (AG, AK) au moins présent contient une unité d'alimentation en tension qui crée la tension d'alimentation du dispositif.

**8.** Dispositif selon les revendications 6 ou 7, dans lequel l'adaptateur (AG, AK) au moins présent contient un dispositif de séparation galvanique pour la transmission des signaux.

**9.** Dispositif selon l'une des revendications 6 à 8, dans lequel l'adaptateur (AG, AK) au moins présent est configuré de telle sorte que la commande périphérique (301) reste inchangée.

**10.** Dispositif selon l'une des revendications 6 à 9, qui contient une interface série, de préférence une interface SSI, pour délivrer la valeur absolue totale, et des moyens qui traitent par l'intermédiaire de l'interface série des niveaux qui sont prédéterminés par une commande externe (301).

**11.** Dispositif selon la revendication 10, qui contient en vue d'une programmation une interface RS 422 et/ou une interface RS485.

**12.** Dispositif de mesure d'angles ou de distances doté d'une tête de palpage (100) selon l'une des revendications 1 à 5, qui contient une interface série, de préférence une interface SSI, pour délivrer la valeur absolue totale et des moyens pour traiter par l'intermédiaire de l'interface série des niveaux qui sont prédéterminés par une commande externe (301).

**13.** Dispositif selon la revendication 12, qui contient en vue d'une programmation une interface RS 422 et/ou une interface RS485.

**14.** Procédé de mesure d'angles et/ou de distances à l'aide d'un dispositif de mesure doté d'une tête de palpage (100) selon la revendication 1, **caractérisé en ce que** l'on y forme une valeur absolue totale à partir d'une valeur absolue déterminée par au moins un capteur (141) et d'une valeur d'incrément déterminée par au moins un capteur (142), cette valeur absolue totale étant présentée sous forme binaire/numérique.

**15.** Procédé selon la revendication 14, dans lequel les valeurs d'incrément déterminées commandent l'association synchrone qui fournit des valeurs absolues totales dans une électronique de capteur (105).

**16.** Procédé selon les revendications 14 ou 15, dans lequel la direction de déplacement dans la plage de résolution du dispositif de mesure est dérivée par une électronique de capteur (105) des valeurs d'incrément déterminées.

**17.** Procédé selon l'une des revendications 14 à 16, dans lequel une temporisation du signal du dispositif de mesure est exécutée lors de la formation de la valeur absolue totale dans le traitement du signal.

**18.** Procédé selon l'une des revendications 14 à 17, dans lequel les valeurs d'incrément sont déterminés à partir de signaux analogiques par des comparateurs (105) de valeurs de seuil, de préférence cadencés.

**19.** Procédé selon l'une des revendications 14 à 18, dans lequel des niveaux imposés par une commande externe (301) sont traités.

**20.** Procédé selon la revendication 19, dans lequel les niveaux imposés de l'extérieur, combinés à un conducteur de données et à un conducteur d'horloge d'une interface série transmettent en fonction du niveau des informations qui concernent les niveaux et le temps.

**21.** Procédé selon la revendication 20, dans lequel le signal d'horloge est temporisé après un flanc négatif de cadence et un intervalle de temps qui est plus long que la durée des basculements monostables de l'interface série.

**22.** Procédé selon les revendications 20 ou 21, dans lequel un conducteur de données de l'interface série amène un signal LOW (bas) à la sortie de données lorsqu'une perturbation est constatée dans le dispositif.

**23.** Procédé selon l'une des revendications 20 à 22, dans lequel un rapport impulsion/pause asymétrique est sélectionné pour augmenter la fréquence de transmission.

**24.** Procédé selon l'une des revendications 20 à 23, dans lequel la valeur absolue totale est fixée à "zéro" par l'interface série lorsqu'un flanc d'impulsion d'horloge est défini.

**25.** Procédé selon l'une des revendications 20 à 24, dans lequel des signaux analogiques des valeurs d'incrément sont délivrés en plus de la valeur absolue du signal.

Fig. 1

Fig. 2

P2
P1
P3
P4
142

Fig. 3

301
5 V
Digital
(ohne Zusatz)

SSI

AK
LL-Treiber
(real time)

201

4 Leitungen (2xLL)

5/0 V
SSI (LL)
(evtl. RS485)

AG
5 V-Regler
LL-Treiber

SSI

100

102

ASIC
104

Analog -
Interface

Digital -
Interface

105
151
152
106

Fig. 4

Fig. 5

EP 1 102 039 B1